(19)

Europäisches
Patentamt
European
Patent Office
Office européen
des brevets

(11) **EP 4 651 001 A1**

(12) **EUROPEAN PATENT APPLICATION**
published in accordance with Art. 153(4) EPC

(43) Date of publication:
**19.11.2025   Bulletin 2025/47**

(21) Application number: **24752641.1**

(22) Date of filing: **10.01.2024**

(51) International Patent Classification (IPC):
*G06F 21/60* (2013.01)

(52) Cooperative Patent Classification (CPC):
**G06F 18/21; G06F 18/2113; G06F 18/22;
G06F 21/60; G06F 21/62**

(86) International application number:
**PCT/CN2024/071483**

(87) International publication number:
**WO 2024/164783 (15.08.2024 Gazette 2024/33)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **08.02.2023   CN 202310127459**

(71) Applicants:
• **Beijing Institute of Technology
Haidian District
Beijing 100081 (CN)**

• **Huawei Cloud Computing Technologies Co., Ltd.
Guiyang, Guizhou 550025 (CN)**

(72) Inventors:
• **SHEN, Meng
Beijing 100081 (CN)**
• **WANG, Jing
Beijing 100081 (CN)**
• **XUE, Tengfei
Guiyang, Guizhou 550025 (CN)**

(74) Representative: **Thun, Clemens
Mitscherlich PartmbB
Patent- und Rechtsanwälte
Karlstraße 7
80333 München (DE)**

(54) **FEDERATED-LEARNING OPERATION METHOD, SYSTEM AND APPARATUS HAVING ROBUSTNESS**

(57)   This application discloses a federated learning running method with robustness, a system, and an apparatus. The method includes: An aggregation device receives a plurality of first segmented models sent by user equipments, and separately computes a model similarity corresponding to each first segmented model. The aggregation device generates partial aggregated models based on second segmented models, where the second segmented models are selected from the plurality of first segmented models based on model similarities. The aggregation device aggregates partial aggregated models corresponding to the user equipments to generate global aggregated models. In the foregoing process, the aggregation device selects, from the first segmented models based on the model similarities corresponding to the first segmented models that are in a non-plaintext state, the second segmented models that can be used for partial aggregation, to generate the partial aggregated models, and then generates the global aggregated models based on the partial aggregated models, so that a poisoned model can be more conveniently screened out on a basis of protecting user privacy, and lossless model aggregation can be implemented.

EP 4 651 001 A1

User
equipments

Aggregation
device

Blockchain

S210: Generate a plurality of first
segmented models

S210: Send the plurality of first
segmented models to the
aggregation device

S220: Receive the plurality of first segmented models,
and separately compute similarities between the
plurality of first segmented models and a standard
model to obtain a plurality of model similarities

S230: Determine a set of first user equipments based
on the model similarities, and selects, from the first
segmented models based on the set of first user
equipments, second segmented models for aggregation

S240: Generate partial aggregated models based on the
second segmented models

S240: Upload the partial
aggregated models to the
blockchain

S250: Obtain, from the
blockchain, partial aggregated
models corresponding to the
user equipments

S250: Perform aggregation based on the
partial aggregated models to generate
global aggregated models

S250: Send the global
aggregated models to the
corresponding user equipments

S260: Receive the global aggregated
models, and verify the aggregation
device based on the global aggregated
models

FIG. 2

## Description

This application claims priority to Chinese Patent Application No. 202310127459.7, filed with the China National Intellectual Property Administration on February 8, 2023 and entitled "FEDERATED LEARNING RUNNING METHOD WITH ROBUSTNESS, SYSTEM, AND APPARATUS", which is incorporated herein by reference in its entirety.

## TECHNICAL FIELD

This application relates to the field of data sharing, and in particular, to a federated learning running method with robustness, a system, and an apparatus.

## BACKGROUND

With development of information technologies, data becomes an important production factor in current production. To better use the data, various industries have increasing requirements for collaborative data modeling. Currently, a federated learning (federated learning, FL) technology is widely used in the field of collaborative data modeling, to protect data privacy. However, the federated learning technology cannot ensure that both a server in a system and a participating user are trustworthy. For this problem, privacy protection solutions such as differential privacy and homomorphic encryption are provided. However, the foregoing methods have problems such as a complex computation process, a weak privacy protection capability, and even impact on model availability and accuracy. In addition, in an existing model robustness verification method in the federated learning technology, for example, Krum, Trim-Mean, and Median, some normal models or normal model parameters are discarded. This affects model aggregation to some extent.

## SUMMARY

This application provides a federated learning running method with robustness, a system, and an apparatus. An aggregation device selects normal segmented models based on model similarities between segmented models sent by user equipments and a standard model generated by the aggregation device, and performs model aggregation operations to generate global aggregated models. This can better protect data privacy, simply and efficiently select the segmented models, and improve model aggregation accuracy.

According to a first aspect, this application provides a federated learning running method with robustness. The method is applied to a distributed federated learning system, the distributed federated learning system includes user equipments, aggregation devices, and a blockchain, and each aggregation device is connected to a plurality of user equipments. The method includes: The aggregation device receives a plurality of first segmented models sent by the user equipments, and separately computes similarities between the plurality of first segmented models and a standard model to obtain a plurality of model similarities, where the first segmented model is generated by the user equipment by performing segmentation and perturbation on a segmented model obtained through training based on first training data, the standard model is generated by the aggregation device through training based on second training data, and there is a one-to-one correspondence between the plurality of first segmented models and the plurality of model similarities. The aggregation device generates partial aggregated models based on second segmented models, and uploads the partial aggregated models to the blockchain, where the second segmented models are selected by the aggregation device from the plurality of first segmented models based on the model similarities. The aggregation device obtains, from the blockchain, partial aggregated models corresponding to the user equipments, performs aggregation to generate global aggregated models, and sends the global aggregated models to the corresponding user equipments, so that the user equipments verify the aggregation device based on the global aggregated models.

In the foregoing process, the aggregation device determines a non-malicious user equipment based on the model similarities between the first segmented models and the standard model to accurately screen out a suspected poisoned model in the first segmented models, and perform model aggregation operations based on normal first segmented models to generate global aggregated models. This can protect data privacy, simply and efficiently prevent a data poisoning attack, a model attack, or the like, and resolve a problem of poor model accuracy caused by improper screening out of a model and a model parameter in a current robustness verification method, thereby ensuring model aggregation accuracy and implementing lossless modeling.

In a possible implementation, the model similarity is generated by the aggregation device based on a vector of the first segmented model, a vector of the standard model, and a vector size, where a vector size of the first segmented model is the same as a vector size of the standard model. The aggregation device computes, based on the model vectors and the vector size, the similarity between the first segmented model in a non-plaintext state and the standard model, so that the model similarity can be conveniently and accurately computed while data privacy is effectively protected.

In a possible implementation, the aggregation device receives a plurality of segmented random numbers sent by the user equipments, where the segmented random number is generated by the user equipment by performing segmentation and perturbation based on a random number generated by a random number generator. The segmented random number sent by the user equipment is used in a process of partial aggregation of segmented models.

In a possible implementation, before generating the partial aggregated models based on the second segmented models, the aggregation device determines a set of first user equipments based on the model similarities, and uploads the set of first user equipments to the blockchain; and the aggregation device selects, from the first segmented models based on a set of first user equipments that is obtained from the blockchain, the second segmented models for aggregation. The aggregation device determines, based on the model similarities, statuses of the corresponding first segmented models and statuses of the user equipments that send the first segmented models, so that when data privacy is protected, a malicious user equipment can be determined, the suspected poisoned first segmented model can be more accurately screened out, and the data poisoning attack or the model attack can be more simply and efficiently defended against. In addition, the set of first user equipments is uploaded to the blockchain, so that data in the set can be prevented from being tampered with or deleted, thereby protecting data security.

In a possible implementation, when a model similarity corresponding to a first segmented model is greater than or equal to a threshold, the aggregation device adds, to the set of first user equipments, a user equipment that sends the first segmented model. Compared with the existing robustness verification method, the aggregation device may determine the non-malicious user equipment based on the model similarities, and reserve the first segmented models more accurately and in a larger range, thereby improving model aggregation accuracy.

In a possible implementation, the aggregation device obtains the set of first user equipments from the blockchain, determines an intersection set of sets of first user equipments, and determines user equipments in the intersection set; and when segmented random numbers sent by the user equipments are received, the aggregation device generates the partial aggregated models based on the second segmented models sent by the user equipments in the intersection set and the segmented random numbers; or when segmented random numbers sent by the user equipments are not received, the aggregation device generates the partial aggregated models based on the second segmented models sent by the user equipments in the intersection set. The aggregation device substitutes the segmented random number into a computation process of the partial aggregated model, so that segmented random numbers can be aggregated, and a generated random number can be used to verify correctness of an aggregated model sent to the user equipment.

According to a second aspect, this application provides a distributed federated learning system, where the system includes user equipments, aggregation devices, and a blockchain, and each aggregation device is connected to a plurality of user equipments. The user equipments are configured to send a plurality of first segmented models to the aggregation device, where the first segmented model is generated by the user equipment by performing segmentation and perturbation based on a segmented model obtained through training based on first training data. The aggregation device is configured to: receive the plurality of first segmented models sent by the user equipments, and separately compute similarities between the plurality of first segmented models and a standard model to obtain a plurality of model similarities, where the standard model is generated by the aggregation device through training based on second training data, and there is a one-to-one correspondence between the plurality of first segmented models and the plurality of model similarities; generate partial aggregated models based on second segmented models, and upload the partial aggregated models to the blockchain, where the second segmented models are selected by the aggregation device from the plurality of first segmented models based on the model similarities; and obtain, from the blockchain, partial aggregated models corresponding to the user equipments, perform aggregation to generate global aggregated models, and send the global aggregated models to the corresponding user equipments. The user equipments are further configured to verify the aggregation device based on the global aggregated models.

In a possible implementation, the model similarity is generated by the aggregation device based on a vector of the first segmented model, a vector of the standard model, and a vector size, where a vector size of the first segmented model is the same as a vector size of the standard model.

In a possible implementation, the user equipments are further configured to: generate a plurality of segmented random numbers, and send the plurality of segmented random numbers to the aggregation device, where the segmented random number is generated by the user equipment by performing segmentation and perturbation based on a random number generated by a random number generator.

In a possible implementation, before the aggregation device is configured to generate the partial aggregated models based on the second segmented models, the aggregation device is further configured to: determine a set of first user equipments based on the model similarities, and upload the set of first user equipments to the blockchain; and select, from the first segmented models based on a set of first user equipments that is obtained from the blockchain, the second segmented models for aggregation.

In a possible implementation, the aggregation device is specifically configured to: when a model similarity corresponding to a first segmented model is greater than or equal to a threshold, add, to the set of first user equipments, a user equipment that sends the first segmented model.

In a possible implementation, the aggregation device is specifically configured to: obtain the set of first user equipments from the blockchain, determine an intersection set of sets of first user equipments, and determine user equipments in the intersection set; and when segmented random numbers sent by the user equipments are received, generate the partial aggregated models based on the second segmented models sent by the user equipments in the intersection set and the segmented random numbers; or when segmented random numbers sent by the user equipments are not received, generate the partial aggregated models based on the second segmented models sent by the user equipments in the intersection set.

In a possible implementation, the user equipment is specifically configured to: receive global aggregated models, and eliminate random numbers in the received global aggregated models based on the corresponding random number, to generate a plurality of global models; and verify the aggregation device based on the plurality of global models.

In a possible implementation, the user equipment is specifically configured to: when the plurality of global models are completely the same, update the segmented model based on the global model; or when the plurality of global models are not completely the same, determine a first global aggregated model corresponding to a first global model that is different from a plurality of remaining global models, and disconnect a connection to an aggregation device that sends the first global aggregated model.

According to a third aspect, this application provides an aggregation apparatus, used in the aggregation device in the distributed federated learning system provided in the second aspect. The system includes user equipments, aggregation devices, and a blockchain including the aggregation devices, and each aggregation device is connected to a plurality of user equipments. The aggregation apparatus includes a transceiver module, a computing module, and an aggregation module. The transceiver module is configured to receive a plurality of first segmented models sent by the user equipments, where the first segmented model is generated by the user equipment by performing segmentation and perturbation on a segmented model obtained through training based on first training data. The computing module is configured to separately compute similarities between the plurality of first segmented models and a standard model to obtain a plurality of model similarities, where the standard model is generated by the aggregation device through training based on second training data, and there is a one-to-one correspondence between the plurality of first segmented models and the plurality of similarities. The aggregation module is configured to generate partial aggregated models based on second segmented models, where the second segmented models are selected from the plurality of first segmented models based on the model similarities. The transceiver module is further configured to: upload the partial aggregated models to the blockchain, and obtain, from the blockchain, partial aggregated models corresponding to the user equipments. The aggregation module performs aggregation based on the partial aggregated models corresponding to the user equipments to generate global aggregated models. The transceiver module is further configured to send the global aggregated models to the corresponding user equipments, so that the user equipments verify the aggregation device based on the global aggregated models.

In a possible implementation, the model similarity is generated by the aggregation device based on a vector of the first segmented model, a vector of the standard model, and a vector size, where a vector size of the first segmented model is the same as a vector size of the standard model.

In a possible implementation, the transceiver module is further configured to receive a plurality of segmented random numbers sent by the user equipments, where the segmented random number is generated by the user equipment by performing segmentation and perturbation based on a random number generated by a random number generator.

In a possible implementation, the aggregation module is specifically configured to: determine a set of first user equipments based on the model similarities, and upload the set of first user equipments to the blockchain through the transceiver module; and select, from the first segmented models based on the set of first user equipments that is obtained by the transceiver module from the blockchain, the second segmented models for aggregation.

In a possible implementation, the aggregation module is specifically configured to: when a model similarity corresponding to a first segmented model is greater than or equal to a threshold, add, to the set of first user equipments, a user equipment that sends the first segmented model.

In a possible implementation, the aggregation module is specifically configured to: obtain the set of a plurality of first user equipments from the blockchain through the transceiver module, determine an intersection set of sets of first user equipments, and determine user equipments in the intersection set; and when the transceiver module receives segmented random numbers sent by the user equipments, generate the partial aggregated models based on the second segmented models sent by the user equipments in the intersection set and the segmented random numbers; or when the transceiver module does not receive segmented random numbers sent by the user equipments, generate the partial aggregated models based on the second segmented models sent by the user equipments in the intersection set.

According to a fourth aspect, this application provides an aggregation device. The aggregation device includes at least one processor and one memory. The memory stores instructions. When the instructions are executed by the at least one processor, the at least one processor is enabled to perform the method according to the first aspect.

According to a fifth aspect, this application provides a computing device cluster. The cluster includes at least one computing device. Each computing device includes a processor and a memory. A processor of the at least one computing device is configured to execute instructions stored in a memory of the at least one computing device, to enable the computing device cluster to perform the method according to the first aspect.

According to a sixth aspect, this application provides a computer program product including instructions. When the instructions are run by a computer device cluster, the computer device cluster is enabled to perform the method according to the first aspect.

According to a seventh aspect, this application provides a computer-readable storage medium. The storage medium includes computer program instructions. When the computer program instructions are executed by a computing device cluster, the computing device cluster performs the method according to the first aspect.

Based on the implementations provided in the foregoing aspects, this application may further combine the implementations to provide more implementations.

**BRIEF DESCRIPTION OF DRAWINGS**

To describe technical solutions of embodiments of this application more clearly, the following briefly describes accompanying drawings for describing embodiments.

FIG. 1 is a diagram of a structure of a distributed federated learning system according to an embodiment of this application;
FIG. 2 is a diagram of a process of a federated learning running method with robustness according to an embodiment of this application;
FIG. 3 is a diagram of a structure of an aggregation apparatus according to an embodiment of this application;
FIG. 4 is a diagram of a structure of a computing device according to an embodiment of this application;
FIG. 5 is a diagram of a structure of a computing device cluster according to an embodiment of this application; and
FIG. 6 is a diagram of a structure of one or more computing devices connected through a network according to an embodiment of this application.

**DESCRIPTION OF EMBODIMENTS**

Currently, with development of information technologies, a plurality of industries may perform collaborative data modeling by sharing data, to implement more accurate control over user requirements. However, due to distrust among enterprises, organizations, and individuals, to protect data privacy and security, an amount of shared data is limited and a scale is small. To implement data management and analysis across levels, regions, and the like and enable data to play a greater role in fields such as city management, finance, transportation, healthcare, and communication, a federated learning technology is provided. The federated learning technology may be used to resolve a problem that the data needs to be shared, but sharing is inconvenient due to potential privacy leakage. However, in a process of performing data modeling by using the federated learning technology, a data security problem and a model aggregation problem also exist. Therefore, a distributed federated learning system is provided on the basis of federated learning, to further ensure data privacy and security by decentralizing authority of a single server in federated learning.

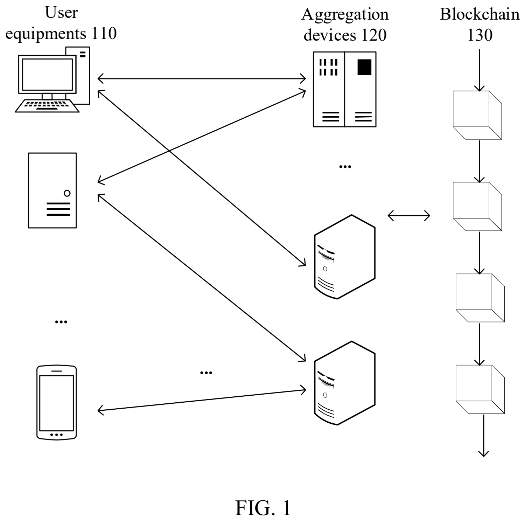

FIG. 1 shows a distributed federated learning system according to this application. The system includes a plurality of user equipments 110, a plurality of aggregation devices 120, and a blockchain 130. The user equipment and the aggregation device may be directly connected through a network, or may be indirectly connected in forms such as router forwarding. This is not specifically limited in this application. Each aggregation device is connected to a plurality of user equipments, each user equipment is connected to a plurality of aggregation devices, and a quantity of aggregation devices connected to each user equipment is not less than 1+N/3. N is a quantity of all aggregation devices in the distributed federated learning system, and the aggregation device and the user equipment are connected through a network. This is not specifically limited in this application. During specific implementation, the plurality of user equipments include a mobile phone (mobile phone), a tablet computer (pad), a desktop computer, and the like; or further include wearable devices such as devices having functions such as data storage and data processing, for example, a smartwatch. The user equipment may alternatively be a communication terminal or an internet terminal, for example, a PDA or a MID (Mobile Internet Device, mobile internet device). A type of the user equipment is not specifically limited in this application.

During specific implementation, in addition to model aggregation, the aggregation device may further serve as a consensus node of the blockchain. The aggregation device may be a node, for example, an edge node or an edge server, that has edge computing power and that can perform data analysis, data storage, and network connection. The aggregation device may be a physical server, for example, an ARM server, an X86 server, a virtual machine, a container, or the like. This is not specifically limited in this application. The aggregation device is configured to aggregate models sent by user equipments, is configured to train a model, and may be further configured to provide services such as outsourcing computing and cache resources for the user equipments, to ensure data security and reduce computing pressure of the user equipments.

During specific implementation, the blockchain serves as a data sharing platform in the distributed federated learning system, and is configured to record data that is uploaded by the aggregation devices and that is recognized by a consensus mechanism, where recorded data does not require a centralized device and management organization. The blockchain allows the aggregation device to query, based on a smart contract, data uploaded by all the aggregation devices, so that data security can be further improved, and the data can be prevented from being deleted or changed.

The distributed federated learning system is a decentralized asynchronous federated learning architecture. Authority of a single central server may be distributed by using a plurality of aggregation devices, computing tasks and the like of the central server are offloaded to the aggregation devices, and aggregation operations are performed on the aggregation devices, so that a problem of a serious threat to user privacy, caused by data leakage when the single central server obtains data uploaded by all user equipments, can be avoided.

Currently, protection in the federated learning technology is usually only for one of privacy protection and robust aggregation. For example, privacy protection in the federated learning technology is implemented by using a homomorphic encryption algorithm or a localized differential privacy algorithm. However, the foregoing two methods also have some problems. When the homomorphic encryption algorithm is used, processes such as encryption and decryption computation are complex, and computation costs are high. In addition, a private key is shared among all user equipments, and leakage of the private key poses a privacy threat to all the user equipments. When the differential privacy algorithm is used, if a user equipment adds noise to a model for privacy protection, availability of the model is poor, causing reduction in test accuracy of the model. Solutions for implementing robust aggregation in the federated learning technology mainly include a Krum algorithm, a Trim-Mean algorithm, and a Median algorithm. The foregoing algorithms discard a specific quantity of local models or local model parameters according to respective standards, thereby affecting model aggregation and model accuracy to some extent.

Therefore, this application provides a federated learning secure running method with robustness. An aggregation device computes model similarities between a plurality of first segmented models sent by user equipments and a standard model generated by the aggregation device, selects, from the first segmented models based on the model similarities, second segmented models that can be used for partial aggregation, generates partial aggregated models based on the second segmented models, and finally generates global aggregated models based on partial aggregated models corresponding to the user equipments and sends the global models to the corresponding user equipments. In the foregoing process, bidirectional trust verification between the aggregation device and the user equipment can be more conveniently implemented, user privacy can be protected, and it can be ensured that a robust aggregation method does not affect model aggregation, which improves model aggregation accuracy.

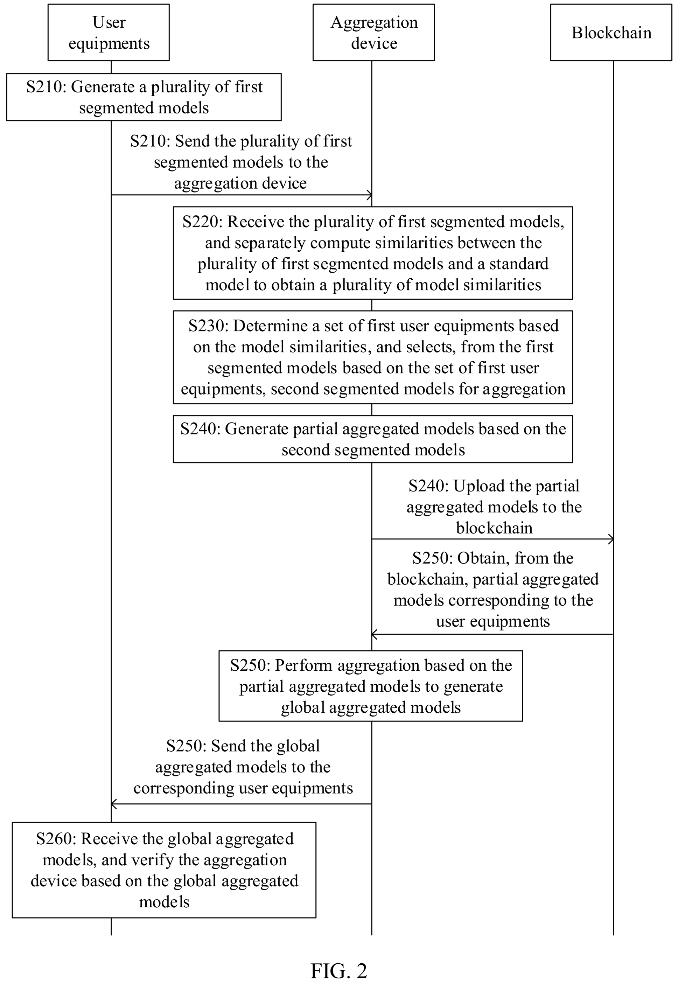

FIG. 2 is a diagram of a process of a federated learning running method with robustness according to this application. The method is applied to the distributed federated learning system shown in FIG. 1, and the method includes the following steps.

S210: User equipments generate a plurality of first segmented models, and send the plurality of first segmented models to an aggregation device.

Before the user equipments generate the plurality of first segmented models, each user equipment first performs training based on first training data to generate a segmented model, performs segmentation and perturbation on the segmented model according to a data segmentation algorithm to generate a plurality of first segmented models, and sends the first segmented models to the aggregation device. The segmented model is obtained by the user equipment by training a machine learning model based on stored data, and is used for global aggregation to generate a global model.

Specific steps of generating, by the user equipment, the first segmented models from the segmented model according to the data segmentation algorithm are as follows: First, $v^*$ is computed, where $v^*=v/n$. $v$ is the segmented model on which segmentation and perturbation need to be performed, and $n$ is a quantity of aggregation devices corresponding to the user equipment. $v^*$ generated by performing segmentation on $v$ does not leak plaintext information about $v$, so that user privacy can be protected. Then, the user equipment generates a group of perturbation random numbers $\{r_1, r_2, ..., r_n\}$, and computes the first segmented models according to the following formula:

$$\begin{cases} v_i = v^* + r_i - r_{i+1}, i \neq n \\ v_n = v^* + r_n - r_1, i = n \end{cases}$$

In the foregoing formula, $i$ indicates a corresponding aggregation device, and the user equipment sends a computed first segmented model to the corresponding aggregation device $i$. The perturbation random number in the first segmented model may enable the first segmented model to be in a non-plaintext state, and the aggregation device cannot decrypt the first segmented model, so that user privacy can be protected. When the first segmented models generated by the user equipment are aggregated, perturbation random numbers in the first segmented models may be completely canceled, so that model aggregation is not affected. In a possible implementation, the perturbation random number may be replaced with a number, a character, or the like that can be completely canceled when the first segmented models are aggregated. This is not specifically limited in this application.

In a possible implementation, the user equipment may alternatively process the segmented model in another manner, to obtain the first segmented models. This is not specifically limited in this application.

In a possible implementation, in addition to generating the plurality of first segmented models, the user equipment further generates a plurality of segmented random numbers. The segmented random numbers may be used in an aggregation process of the first segmented models. The segmented random numbers may be recombined into a random number as the models are aggregated. When receiving an aggregated model including a random number, the user equipment may verify, based on the random number, whether the model is correct. The user equipment generates the random number through a random number generator, and performs segmentation and perturbation on the random number according to a data segmentation algorithm to generate the plurality of segmented random numbers. The data segmentation algorithm is the same as the data segmentation algorithm for computing the first segmented models, and details are not described herein again. The user equipment sends the segmented random numbers to the aggregation devices.

The user equipment performs segmentation and perturbation operations on the segmented model and the random number, and sends the generated first segmented models to the corresponding aggregation devices. Because the first segmented model includes the perturbation random number and the like, and is in the non-plaintext state, in an entire federated learning process, the aggregation device cannot decrypt the received first segmented model, so that a member inference attack and an isolation attack can be defended against, and user data security can be better ensured. When the first segmented models are subsequently aggregated, the perturbation random numbers in the first segmented models in the non-plaintext state may be canceled, so that a model aggregation result is not affected.

In a specific implementation, a user equipment M is separately connected to an aggregation device A, an aggregation device B, and an aggregation device C; and the user equipment M generates a segmented model $w^1$ based on first training data, and generates a random number $R^1$ through a random number generator. Then, the user equipment M performs segmentation and perturbation on the segmented model $w^1$ according to the data segmentation algorithm, to generate three first segmented models $w_A^1$, $w_B^1$, and $w_C^1$. The user equipment M obtains, through computation according to the data segmentation algorithm and based on the corresponding aggregation devices, that the first segmented model $w_A^1$ sent to the aggregation device A is equal to $\frac{w^1}{3} + r_A - r_B$, the first segmented model $w_B^1$ sent to the aggregation device B is equal to $\frac{w^1}{3} + r_B - r_C$, and the first segmented model $w_C^1$ sent to the aggregation device C is equal to $\frac{w^1}{3} + r_C - r_A$. Similarly, it can be learned that the user equipment M generates three segmented random numbers according to the data segmentation algorithm and based on the random number $R^1$, and the segmented random numbers are separately $R_A^1, R_B^1$, and $R_C^1$. The segmented random number $R_A^1$ sent by the user equipment M to the aggregation device A is $\frac{R^1}{3} + r_A - r_B$, the segmented random number $R_B^1$ sent to the aggregation device B is $\frac{R^1}{3} + r_B - r_C$, and the segmented random number $R_C^1$ sent to the aggregation device C is $\frac{R^1}{3} + r_C - r_A$.

In a possible implementation, before the user equipments perform training based on respective first training data, all the user equipments negotiate related parameters (such as a network structure, a training round, and a learning rate) of a training process and a model structure. The foregoing process may be implemented through communication on an offline channel, or may be implemented through the aggregation device. This is not specifically limited in this application.

S220: The aggregation device receives the plurality of first segmented models sent by the user equipments, and separately computes similarities between the plurality of first segmented models and a standard model to obtain a plurality of model similarities, where the standard model is generated by the aggregation device through training based on second training data.

The aggregation device receives the plurality of first segmented models sent by the user equipments, and separately computes Pearson similarities between the plurality of first segmented models and the standard model according to a Pearson-based robust aggregation rule to obtain the plurality of model similarities. There is a one-to-one correspondence between the plurality of first segmented models and the plurality of model similarities. The standard model is obtained by the aggregation device by training a machine learning model based on the second training data in a segmented model training manner. The second training data is a small amount of data stored in the aggregation device, and is the same as some data in the first training data. Therefore, the aggregation device may determine, based on the model similarity corresponding to the first segmented model without decrypting the first segmented model, whether the first segmented model is normal. The model similarity is a Pearson similarity. A computation formula is as follows:

$$\rho_{X,Y} = \frac{\sum XY - \frac{\sum X \sum Y}{N}}{\sqrt{(\sum X^2 - \frac{(\sum X)^2}{N})(\sum Y^2 - \frac{(\sum Y)^2}{N})}}$$

X is a vector of the first segmented model, Y is a vector of the standard model, N is a size of the vector of the first segmented model and a size of the vector of the standard model, where the size of the vector of the first segmented model and the size of the vector of the standard model are the same, and $\rho_{X,Y}$ is the model similarity between the first segmented model and the standard model. In a possible implementation, the aggregation device may compute the model similarity corresponding to the first segmented model in another computation manner, for example, compute a cosine similarity or a Jaccard similarity coefficient; or the aggregation device computes, based on other data forms of the first segmented model and the standard model, the model similarity corresponding to the first segmented model. This is not specifically limited in this application.

In this application, the similarities between the first segmented models in the non-plaintext state and the standard model are computed, so that accurate model similarities can be conveniently and efficiently obtained when user data privacy is effectively protected, and therefore normal first segmented models are determined based on the model similarities for subsequent aggregation operations.

S230: The aggregation device determines a set of first user equipments based on the model similarities, and selects, from the first segmented models based on the set of first user equipments, second segmented models for aggregation.

The aggregation device determines the set of first user equipments based on the model similarities, and uploads the set of first user equipments to a blockchain. Then, the aggregation device selects, from the first segmented models based on a set of first user equipments that is obtained from the blockchain, the second segmented models for aggregation.

In a possible implementation, the aggregation device obtains, in step S220, the plurality of model similarities corresponding to the plurality of first segmented models. When a model similarity corresponding to a first segmented model is greater than or equal to a threshold, the first segmented model is strongly correlated with the standard model, and the aggregation device determines that the first segmented model is a normal model, adds a user equipment that sends the first segmented model to the set of first user equipments, and uploads the set of first user equipments to the blockchain.

In another possible implementation, when a model similarity corresponding to a first segmented model is less than the threshold, the first segmented model is weakly correlated with the standard model, and the aggregation device determines that the first segmented model is a suspected poisoned model. Because the suspected poisoned model has negative impact on model aggregation and model accuracy, the aggregation device determines that a user equipment that sends the suspected poisoned first segmented model is a malicious user equipment, and eliminate the suspected poisoned first segmented model.

In the foregoing process, the aggregation device determines statuses of the first segmented models based on the computed Pearson similarities between the local segmented models in the non-plaintext state and the standard model, to determine statuses of the user equipments that send the first segmented models, so that when user data privacy is ensured, the suspected poisoned segmented model can be more accurately screened out, and the malicious user equipment can be determined, to defend against a data poisoning attack or a model attack of the malicious user equipment. In addition, computation in the entire process is simple and efficient. The aggregation device uploads the set of first user equipments to the blockchain, so that data included in the set can be prevented from being tampered with or deleted, thereby further ensuring data security. The aggregation device may further upload a set of malicious user equipments to the blockchain. This is not specifically limited in this application.

In a specific implementation, an aggregation device A is separately connected to a user equipment 1, a user equipment 2, and a user equipment 3. The aggregation device A receives a first segmented model $w_A^1$ sent by the user equipment 1, receives a first segmented model $w_A^2$ sent by the user equipment 2, and receives a first segmented model $w_A^3$ sent by the user equipment 3; and generates a standard model $w^A$ through training based on second training data stored in the aggregation device A. The aggregation device separately computes Pearson similarities between $w^A$ and

$w_A^1$, $w_A^2$, and $w_A^3$, to obtain a plurality of model similarities. $w_A^1$, $w_A^2$, and $w_A^3$ each correspond to one model similarity. When a model similarity corresponding to $w_A^1$ is greater than the threshold, the aggregation device adds the user equipment 1 to a set of first user equipments. When a model similarity corresponding to $w_A^2$ is less than the threshold, the aggregation device determines that $w_A^2$ is a suspected poisoned model, and eliminate the first segmented model. When a model similarity corresponding to $w_A^3$ is equal to the threshold, the aggregation device adds the user equipment 3 to the set of first user equipments. The aggregation device A organizes, in a form of a block, the set of first user equipments including the user equipment 1 and the user equipment 3, and connects the new block to a main chain of the blockchain after authenticating the new block according to a consensus algorithm. Similarly, another aggregation device in the distributed federated learning system also determines a set of first user equipments based on a plurality of computed model similarities, and uploads the set of first user equipments to the blockchain. Details are not described herein.

After uploading the determined set of first user equipments to the blockchain, the aggregation device obtains a set of first user equipments from the blockchain, determines an intersection set of sets of first user equipments, and determines user equipments in the intersection set. The aggregation device selects, from the received first segmented models, first segmented models sent by the user equipments in the intersection set as the second segmented models for partial aggregation.

S240: The aggregation device generates partial aggregated models based on the second segmented models, and uploads the partial aggregated models to the blockchain, where the second segmented models are selected by the aggregation device from the first segmented models based on the model similarities.

After the aggregation device determines the second segmented models based on the user equipments in the intersection set of the sets of first user equipments, to aggregate segmented random numbers into a random number for verifying model correctness, when segmented random numbers sent by the user equipments are received, the aggregation device generates the partial aggregated models based on the second segmented models and the segmented random numbers; or when segmented random numbers sent by the user equipments are not received, the aggregation device generates the partial aggregated models based on the second segmented models. In the foregoing two different cases, partial aggregated model computation formulas are as follows:

$$
\begin{cases}
g_j^i = \sum_{x=1}^{p} w_j^x + R_j^i, & \text{an aggregation device } j \text{ receives a segmented} \\
& \text{random number } R_j^i \text{ sent by a user equipment } i \\
g_j^i = \sum_{x=1}^{p} w_j^x, & \text{the aggregation device } j \text{ does not receive the segmented} \\
& \text{random number } R_j^i \text{ sent by the user equipment } i
\end{cases}
$$

$g_j^i$ is a partial aggregated model, and $p$ is a quantity of user equipments corresponding to the aggregation device $j$. After obtaining a plurality of partial aggregated models through computation, the aggregation device uploads the plurality of generated partial aggregated models to the blockchain. In a possible implementation, when the aggregation device and the user equipment are known, the aggregation device may upload the plurality of generated partial aggregated models to a private space. Only the known aggregation device uploads data to the private space, and the known user equipment may obtain data from the private space.

In the foregoing process, the aggregation device performs partial aggregation based on the second segmented models, so that it can be ensured that a suspected poisoned first segmented model sent by a malicious user equipment does not exist in a partial aggregation process, and accuracy of the partial aggregated models can be improved. The aggregation device uploads the plurality of generated partial aggregated models to the blockchain, so that security of the partial aggregated models can be ensured, the partial aggregated models can be prevented from being maliciously tampered with, and so on.

In a specific implementation, an aggregation device B queries, from the blockchain, a plurality of sets of good user equipments uploaded by a plurality of aggregation devices such as an aggregation device A and an aggregation device C in the system, and determines an intersection set of the sets of first user equipments. The intersection set includes a user equipment 1 and a user equipment 3 that are connected to the aggregation device B, and a user equipment 2 that is not connected to the aggregation device B. The aggregation device B performs partial aggregation based on received first segmented models and segmented random numbers separately sent by the user equipment 1 and the user equipment 3, to obtain partial aggregated models $g_B^1$ and $g_B^3$ according to a partial aggregated model computation formula.

$$g_B^1 = w_B^1 + w_B^3 + R_B^1$$, and $g_B^3 = w_B^1 + w_B^3 + R_B^3$. The aggregated model B performs partial aggregation based on the received first segmented models, to obtain a partial aggregated model $g_B^2$ through computation.

$$g_B^2 = w_B^1 + w_B^3$$. The aggregation device B organizes the three generated partial aggregated models in a form of a block, and connects the new block to the main chain of the blockchain after authenticating the new block according to the consensus algorithm. Similarly, it can be learned that another aggregation device in the system also generates a plurality of partial aggregated models, and uploads the partial aggregated models to the blockchain. Details are not described herein.

S250: The aggregation device obtains, from the blockchain, partial aggregated models corresponding to the user equipments, performs aggregation to generate global aggregated models, and sends the global aggregated models to the corresponding user equipments.

The aggregation device obtains, from the blockchain, the partial aggregated models corresponding to the user equipments, and performs aggregation to generate the global aggregated models. A global aggregated model computation formula is as follows:

$$g^i = \sum_{j=1}^{n} g_j^i$$

$g^i$ is a global aggregated model, $i$ indicates a user equipment that receives the global aggregated model, $g_j^i$ is a partial aggregated model, $j$ indicates an aggregation device, and $n$ is a quantity of aggregation devices connected to the user equipment $i$. The global aggregated model obtained through computation according to the foregoing formula includes a segmented model generated by a normal user equipment in the system and a random number generated by the user equipment $i$. When the global model $g^i$ is obtained through computation, the aggregation device sends the global aggregated model $g^i$ to the corresponding user equipment $i$.

In a specific implementation, a user equipment 1 is separately connected to an aggregation device A, an aggregation device B, and an aggregation device C, the aggregation device A is separately connected to the user equipment 1, a user equipment 2, and a user equipment 3, the aggregation device B is separately connected to the user equipment 1 and the user equipment 3, and the aggregation device C is separately connected to the user equipment 1 and the user equipment 2. According to the foregoing steps S210 to S240, the blockchain includes partial aggregated models separately uploaded by the three aggregation devices. Three partial aggregated models uploaded by the aggregation device A are separately $g_A^1 = w_A^1 + w_A^2 + w_A^3 + R_A^1, \; g_A^2 = w_A^1 + w_A^2 + w_A^3 + R_A^2$, and $g_A^3 = w_A^1 + w_A^2 + w_A^3 + R_A^3$. Three partial aggregated models uploaded by the aggregation device B are separately $g_B^1 = w_B^1 + w_B^3 + R_B^1, \; g_B^2 = w_B^1 + w_B^3$, and $g_B^3 = w_B^1 + w_B^3 + R_B^3$. Three partial aggregated models uploaded by the aggregation device C are separately $g_C^1 = w_C^1 + w_C^2 + R_C^1, \; g_C^2 = w_C^1 + w_C^2 + R_C^2$, and $g_C^3 = w_C^1 + w_C^2$.

The aggregation device A obtains partial aggregated models $g_A^1, \; g_B^1$, and $g_C^1$ from the blockchain, and performs global aggregation to compute a global aggregated model $g^1$ sent to the user equipment 1:

$$g^1 = \sum_{j=A}^{A,B,C} g_j^1 = g_A^1 + g_B^1 + g_C^1$$

$$= w_A^1 + w_A^2 + w_A^3 + R_A^1 + w_B^1 + w_B^3 + R_B^1 + w_C^1 + w_C^2 + R_C^1$$

$$= w^1 + w^2 + w^3 + R^1$$

Similarly, it can be learned that each aggregation device separately sends a plurality of partial aggregated models to connected user equipments. Details are not described in this application.

S260: The user equipments receive the global aggregated models sent by the aggregation device, and verify the aggregation device based on the global aggregated models.

The user equipments receive the global aggregated models sent by the aggregation device, where the global aggregated models include random numbers generated by the corresponding user equipments. To facilitate subsequent operations such as model comparison and segmented model update of the user equipment, the user equipment eliminates the random number in the global aggregated model, to obtain a global model $g$ through computation. A global model computation formula is $g = g^i - R^i$. $i$ indicates a user equipment, $g^i$ is a global aggregated model, and $R^i$ is a random number. When a plurality of global models are obtained, the user equipment compares the plurality of global models, to verify aggregation devices.

In a possible implementation, the user equipment may directly compare the global models or vectors of the global models, or may compare any parameters in the global models. A method for comparing the global models by the user equipment is not specifically limited in this application.

In a possible implementation, the user equipment compares the plurality of global models obtained after random numbers in global aggregated models are eliminated. When the global models are the same, the user equipment determines that the aggregation devices are in a normal state and are not maliciously coerced. Then, the user equipment updates the segmented model based on the global model, trains an updated segmented model based on the first training data to obtain a new segmented model, and performs a next round of learning until the segmented model converges. The user equipment verifies correctness of the global models by comparing the global models obtained after the random numbers in the global aggregated models are eliminated, and performs model update when the global models are correct, so that impact of a malicious global aggregated model sent by a malicious aggregation device on model update and subsequent machine learning can be avoided.

In another possible implementation, the user equipment compares the plurality of global models obtained after random numbers in global aggregated models are eliminated. When the global models are not completely the same, the user equipment determines a first global model that is different from a plurality of remaining global models. The user equipment determines a corresponding first global aggregated model based on the first global model, and determines that an aggregation device that sends the first global aggregated model is maliciously controlled and so on. To reduce impact of a malicious global aggregated model sent by a malicious aggregation device on operations such as segmented model update, the user equipment disconnects a connection to the aggregation device, and may be connected to another normal aggregation device. This is not specifically limited in this application.

In a specific implementation, a user equipment 1 receives global aggregated models respectively sent by an aggregation device A, an aggregation device B, and an aggregation device C, and the user equipment 1 eliminates random numbers in the global aggregated models with reference to a random number $R^1$ generated through a random number generator, to obtain a plurality of global models through computation. When a global aggregated model $g^{1A}$ sent by the aggregation device A is equal to $w^1 + w^2 + w^3 + R^1$, the first user equipment obtains a global model after removing the random number $R^1$ from the global aggregated model $g^{1A}$. Then, the user equipment 1 obtains, through computation in a same manner, a global model corresponding to a global aggregated model sent by the aggregation device B and a global model corresponding to a global aggregated model sent by the aggregation device C. Finally, the user equipment 1 compares the three global models. When the three global models are completely the same, the first user equipment determines that the three aggregation devices honestly perform global aggregation operations. The first user equipment determines that the global models are correct, updates a segmented model based on the global model, and performs a next round of learning.

In the foregoing method, segmented models generated by user equipments are generated through training based on different fields and different levels of first training data included in the user equipments. The user equipment performs segmentation and perturbation on the segmented model, generates first segmented models, and sends the first segmented models to aggregation devices, so that the aggregation device can be prevented from obtaining a segmented model in a plaintext state through decryption, thereby protecting data privacy. Then, the aggregation device performs two aggregation operations based on first segmented models, to generate a global aggregated model. The global aggregated model includes segmented models generated by all normal user equipments. The user equipment updates the segmented model based on the global aggregated model, to improve accuracy of operations such as data analysis and data management performed on the respective segmented model, without directly sharing data between user equipments and while protecting data security. For example, when a user equipment A includes shopping-related data of a user, a user equipment B includes investment asset-related data of the user, and a user equipment C includes personal related data such as an age and an occupation of the user, the aggregation device generates a global aggregated model based on segmented models respectively generated by the three user equipments, so that the global aggregated model is used to update each segmented model. After the user equipment A updates a shopping-related segmented model based on the global aggregated model, the shopping-related segmented model can be used to perform more accurate data analysis on shopping-related data with reference to the age, the occupation, a consumption level, and the like of the user, and more accurately push a commodity or the like to the user.

In conclusion, according to the federated learning secure running method with robustness provided in this application, the model similarities between the first segmented models in the non-plaintext state and the standard model are computed on an aggregation device side, the first user equipments in the system are determined based on the model similarities, and the suspected poisoned model in the first segmented models is accurately screened out, so that the data poisoning attack, the model attack, or the like of the malicious user equipment can be simply and efficiently defended against while user privacy is protected. Before performing partial aggregation, the aggregation device screens out the suspected poisoned model based on the model similarities, so that a problem of poor model accuracy caused by discarding of too many models or model parameters can be reduced, and lossless modeling can be implemented. The aggregation device records, by using the blockchain, the set of first user equipments and the partial aggregated models generated based on the first segmented models, so that a consensus can be reached on the foregoing data in a plurality of aggregation devices according to the consensus algorithm, thereby ensuring data security and preventing data from being deleted or changed.

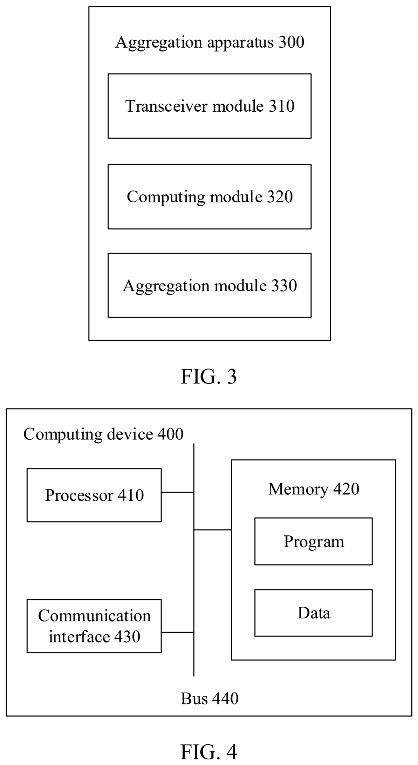

FIG. 3 is a diagram of a structure of an aggregation apparatus according to an embodiment of this application. The aggregation apparatus 300 is used in the aggregation device in the distributed federated learning system shown in FIG. 1. The apparatus includes a transceiver module 310, a computing module 320, and an aggregation module 330. The transceiver module is configured to receive a plurality of first segmented models sent by user equipments, where the first segmented model is generated by the user equipment by performing segmentation and perturbation on a segmented model obtained through training based on first training data. The computing module is configured to separately compute similarities between the plurality of first segmented models and a standard model to obtain a plurality of model similarities, where the standard model is generated by the aggregation device through training based on second training data, and there is a one-to-one correspondence between the plurality of first segmented models and the plurality of similarities. The aggregation module is configured to generate partial aggregated models based on second segmented models, where the second segmented models are selected from the plurality of first segmented models based on the model similarities. The transceiver module is further configured to: upload the partial aggregated models to a blockchain, and obtain, from the blockchain, partial aggregated models corresponding to the user equipments. The aggregation module performs aggregation based on the partial aggregated models corresponding to the user equipments to generate global aggregated models. The transceiver module is further configured to send the global aggregated models to the corresponding user equipments, so that the user equipments verify the aggregation device based on the global aggregated models.

The transceiver module, the computing module, and the aggregation module may all be implemented by using software, or may be implemented by using hardware. For example, the following uses the transceiver module as an example to describe an implementation of the transceiver module. Similarly, for implementations of the computing module and the aggregation module, refer to the implementation of the transceiver module.

A module is used as an example of a software functional unit, and the transceiver module may include code run on a compute instance. The compute instance may include at least one of a physical host (computing device), a virtual machine, and a container. Further, there may be one or more compute instances. For example, the transceiver module may include code run on a plurality of hosts/virtual machines/containers. It should be noted that, the plurality of hosts/virtual machines/containers configured to run the code may be distributed in a same region (region), or may be distributed in different regions. Further, the plurality of hosts/virtual machines/containers configured to run the code may be distributed in a same availability zone (availability zone, AZ), or may be distributed in different AZs. Each AZ includes one data center or a plurality of data centers with similar geographical locations. Usually, one region may include a plurality of AZs.

Similarly, the plurality of hosts/virtual machines/containers configured to run the code may be distributed in a same virtual private cloud (virtual private cloud, VPC), or may be distributed in a plurality of VPCs. Usually, one VPC is set in one region. For communication between two VPCs in a same region and cross-region communication between VPCs in different regions, a communication gateway needs to be disposed in each VPC, and interconnection between the VPCs is implemented through communication gateways.

A module is used as an example of a hardware functional unit, and the transceiver module may include at least one computing device, for example, a server. Alternatively, the transceiver module may be a device implemented by an application-specific integrated circuit (application-specific integrated circuit, ASIC) or a programmable logic device (programmable logic device, PLD), or the like. The PLD may be implemented by a complex programmable logic device (complex programmable logic device, CPLD), a field programmable gate array (field programmable gate array, FPGA), a generic array logic (generic array logic, GAL), or any combination thereof.

A plurality of computing devices included in the transceiver module may be distributed in a same region or different regions. The plurality of computing devices included in the transceiver module may be distributed in a same AZ or different AZs. The plurality of computing devices included in the transceiver module may be distributed in a same VPC or a plurality of VPCs. The plurality of computing devices may be any combination of computing devices such as the server, the ASIC, the PLD, the CPLD, the FPGA, and the GAL.

The transceiver module 310 and the computing module 320 jointly perform step S220 in FIG. 2; and the aggregation module 330 performs step S230 in FIG. 2, and jointly performs step S240 and step S250 in FIG. 2 with the transceiver module 310. It should be noted that, in another embodiment, the transceiver module, the computing module, and the aggregation module may be separately configured to perform any step in the federated learning running method shown in FIG. 2. Steps implemented by the transceiver module, the computing module, and the aggregation module may be specified as required. The transceiver module, the computing module, and the aggregation module separately implement different steps in the federated learning running method shown in FIG. 2, to implement all functions of the aggregation apparatus.

FIG. 4 is a diagram of a structure of a computing device according to an embodiment of this application. The computing device is used in the distributed federated learning system shown in FIG. 1 as an aggregation device, to perform the federated learning running method with robustness shown in FIG. 2. The computing device 400 includes a processor 410, a memory 420, a communication interface 430, and a bus 440. The processor, the memory, and the communication interface may communicate with each other through a bus. It should be understood that a quantity of processors and a quantity of memories in the aggregation device are not limited in this application.

The processor 410 may include at least one general-purpose processor, for example, a central processing unit (central processing unit, CPU), or a combination of a CPU and a hardware chip. The hardware chip may be an application-specific integrated circuit (application-specific integrated circuit, ASIC), a programmable logic device (programmable logic device, PLD), or a combination thereof. The PLD may be a complex programmable logic device (complex programmable logic device, CPLD), a field programmable gate array (field programmable gate array, FPGA), a generic array logic (generic array logic, GAL), or any combination thereof. The processor 410 is configured to execute various types of digital storage instructions. Each step is performed to implement a corresponding function.

The memory 420 may be a volatile memory (volatile memory), for example, a random access memory (random access memory, RAM), a dynamic random access memory (dynamic RAM, DRAM), a static random access memory (static RAM, SRAM), a synchronous dynamic random access memory (synchronous dynamic RAM, SDRAM), a double data rate synchronous dynamic random access memory (double data rate RAM, DDR), or a cache (cache). The memory 420 may alternatively include a combination of the foregoing types. The memory 420 includes executable program code. The processor 410 may implement functions of the transceiver module 310, the computing module 320, and the aggregation module 330 by executing the program code, to implement the federated learning running method with robustness in FIG. 2. In other words, the memory 420 stores instructions used to perform the federated learning running method in FIG. 2.

The communication interface 430 uses a transceiver module, for example, but not limited to, a network interface card or a transceiver, to implement communication between the aggregation device and another device or a communication network; and may be configured to receive a first segmented model, a segmented random number, and the like that are sent by a connected user equipment. This is not specifically limited in this application.

The bus 440 may be a peripheral component interconnect (peripheral component interconnect, PCI) bus, an extended industry standard architecture (extended industry standard architecture, EISA) bus, or the like. The bus may be classified as an address bus, a data bus, a control bus, or the like. For ease of representation, the bus is represented by using only one line in FIG. 4. However, it does not mean that there is only one bus or only one type of bus. The bus 440 may include a path for transmitting information between components (for example, the processor 410, the memory 420, and the communication interface 430) of the aggregation device.

It should be noted that, FIG. 4 merely shows a possible implementation of embodiments of this application. During actual application, the aggregation device may further include more or fewer components. This is not limited herein.

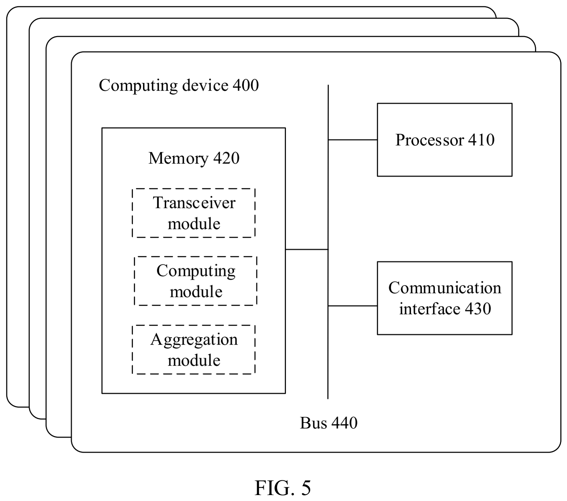

As shown in FIG. 5, an embodiment of this application further provides a computing device cluster. The computing device cluster includes at least one computing device. A memory 420 in one or more computing devices 400 in the computing device cluster may store same instructions used to perform the federated learning running method with robustness provided in embodiments of this application.

In some possible implementations, the memory 420 in the one or more computing devices in the computing device cluster each may alternatively store a part of the instructions used to perform the federated learning running method. In other words, a combination of the one or more computing devices may jointly execute the instructions used to perform the federated learning running method.

It should be noted that memories 420 in different computing devices in the computing device cluster may store different instructions, and the instructions stored in the memories 420 in the different computing devices may implement functions of one or more of the transceiver module, the computing module, and the aggregation module.

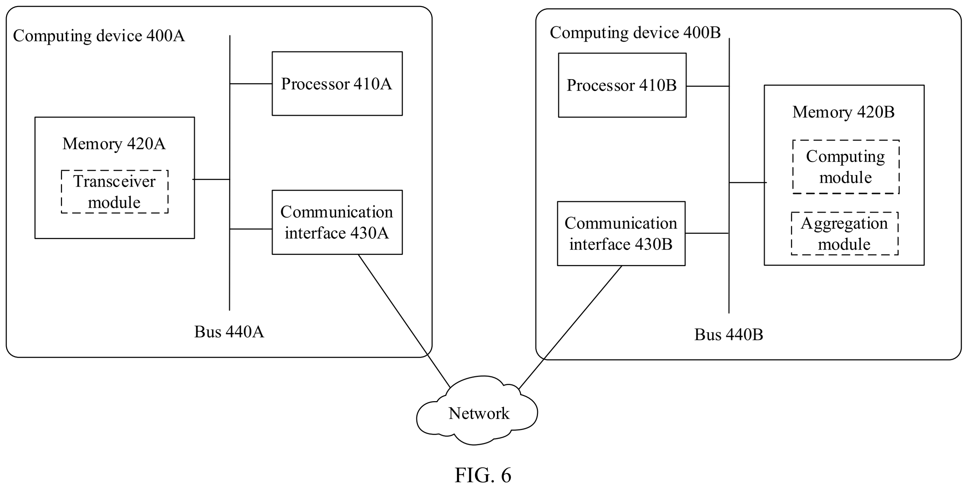

In some possible implementations, the one or more computing devices in the computing device cluster may be connected through a network. The network may be a wide area network, a local area network, or the like. FIG. 6 shows a possible implementation. As shown in FIG. 6, two computing devices 400A and 400B are connected through a network. The computing device 400A includes a processor 410A, a memory 420A, a communication interface 430A, and a bus 440A. The computing device 400B includes a processor 410B, a memory 420B, a communication interface 430B, and a bus 440B. Specifically, each computing device is connected to the network through a communication interface in the computing device. In this possible implementation, the memory 420A in the computing device 400A stores an instruction for performing a function of the obtaining module. In addition, the memory 420B in the computing device 400B stores instructions for executing functions of the template mapping module and the verification module. It should be understood that functions of the computing device 400A shown in FIG. 6 may alternatively be completed by a plurality of computing devices 400. Similarly, functions of the computing device 400B may alternatively be completed by a plurality of computing devices 400.

An embodiment of this application further provides a computer program product including instructions. The computer program product may be software or a program product that includes instructions and that can run on a computing device or be stored in any usable medium. When the computer program product runs on at least one computing device, the at least one computing device is enabled to perform the federated learning running method with robustness shown in FIG. 2.

An embodiment of this application further provides a computer-readable storage medium. The computer-readable storage medium may be any usable medium that can be stored by a computing device, or a data storage device, such as a data center, including one or more usable media. The usable medium may be a magnetic medium (for example, a floppy disk, a hard disk drive, or a magnetic tape), an optical medium (for example, a DVD), a semiconductor medium (for example, a solid-state drive), or the like. The computer-readable storage medium includes instructions, and the instructions instruct the computing device to perform the federated learning running method with robustness shown in FIG. 2.

Finally, it should be noted that the foregoing embodiments are merely intended for describing the technical solutions of the present invention, but not for limiting the present invention. Although the present invention is described in detail with reference to the foregoing embodiments, persons of ordinary skill in the art should understand that they may still make modifications to the technical solutions described in the foregoing embodiments or make equivalent replacements to some technical features thereof, without departing from the protection scope of the technical solutions of embodiments of the present invention.

**Claims**

1. A federated learning running method with robustness, applied to a distributed federated learning system, wherein the distributed federated learning system comprises user equipments, aggregation devices, and a blockchain, each aggregation device is connected to a plurality of user equipments, and the method comprises:

   receiving, by the aggregation device, a plurality of first segmented models sent by the user equipments, and separately computing similarities between the plurality of first segmented models and a standard model to obtain a plurality of model similarities, wherein the first segmented model is generated by the user equipment by performing segmentation and perturbation on a segmented model obtained through training based on first training data, the standard model is generated by the aggregation device through training based on second training data, and there is a one-to-one correspondence between the plurality of first segmented models and the plurality of model similarities;
   generating, by the aggregation device, partial aggregated models based on second segmented models, and uploading the partial aggregated models to the blockchain, wherein the second segmented models are selected by the aggregation device from the plurality of first segmented models based on the model similarities; and
   obtaining, by the aggregation device from the blockchain, partial aggregated models corresponding to the user equipments, performing aggregation to generate global aggregated models, and sending the global aggregated models to the corresponding user equipments, so that the user equipments verify the aggregation device based on the global aggregated models.

2. The method according to claim 1, wherein the model similarity is generated by the aggregation device based on a vector of the first segmented model, a vector of the standard model, and a vector size, wherein a vector size of the first segmented model is the same as a vector size of the standard model.

3. The method according to claim 1, wherein the method further comprises:
receiving, by the aggregation device, a plurality of segmented random numbers sent by the user equipments, wherein the segmented random number is generated by the user equipment by performing segmentation and perturbation based on a random number generated by a random number generator.

4. The method according to claim 3, wherein before the aggregation device generates the partial aggregated models based on the second segmented models, the method further comprises:

determining, by the aggregation device, a set of first user equipments based on the model similarities, and uploading the set of first user equipments to the blockchain; and
selecting, by the aggregation device from the first segmented models based on the set of first user equipments that is obtained from the blockchain, the second segmented models for aggregation.

5. The method according to claim 4, wherein determining, by the aggregation device, the set of first user equipments based on the model similarities comprises:
when the model similarity corresponding to the first segmented model is greater than or equal to a threshold, adding, by the aggregation device to the set of first user equipments, the user equipment that sends the first segmented model.

6. The method according to claim 4 or 5, wherein generating, by the aggregation device, the partial aggregated models based on the second segmented models comprises:

obtaining, by the aggregation device, the set of first user equipments from the blockchain, determining an intersection set of sets of first user equipments, and determining user equipments in the intersection set; and
when segmented random numbers sent by the user equipments are received, generating, by the aggregation device, the partial aggregated models based on the second segmented models sent by the user equipments in the intersection set and the segmented random numbers; or
when segmented random numbers sent by the user equipments are not received, generating, by the aggregation device, the partial aggregated models based on the second segmented models sent by the user equipments in the intersection set.

7. A distributed federated learning system, wherein the system comprises user equipments, aggregation devices, and a blockchain, and each aggregation device is connected to a plurality of user equipments;

the user equipments are configured to send a plurality of first segmented models to the aggregation device, wherein the first segmented model is generated by the user equipment by performing segmentation and perturbation based on a segmented model obtained through training based on first training data;
the aggregation device is configured to: receive the plurality of first segmented models sent by the user equipments, and separately compute similarities between the plurality of first segmented models and a standard model to obtain a plurality of model similarities, wherein the standard model is generated by the aggregation device through training based on second training data, and there is a one-to-one correspondence between the plurality of first segmented models and the plurality of model similarities;
generate partial aggregated models based on second segmented models, and upload the partial aggregated models to the blockchain, wherein the second segmented models are selected by the aggregation device from the plurality of first segmented models based on the model similarities;
and
obtain, from the blockchain, partial aggregated models corresponding to the user equipments, perform aggregation to generate global aggregated models, and send the global aggregated models to the corresponding user equipments; and
the user equipments are further configured to verify the aggregation device based on the global aggregated models.

8. The system according to claim 7, wherein the model similarity is generated by the aggregation device based on a vector of the first segmented model, a vector of the standard model, and a vector size, wherein a vector size of the first segmented model is the same as a vector size of the standard model.

9. The system according to claim 7, wherein the user equipments are further configured to: generate a plurality of segmented random numbers, and send the plurality of segmented random numbers to the aggregation device, wherein the segmented random number is generated by the user equipment by performing segmentation and perturbation based on a random number generated by a random number generator.

10. The system according to claim 9, wherein before the aggregation device is configured to generate the partial aggregated models based on the second segmented models, the aggregation device is further configured to:

determine a set of first user equipments based on the model similarities, and upload the set of first user equipments to the blockchain; and

select, from the first segmented models based on the set of first user equipments that is obtained from the blockchain, the second segmented models for aggregation.

11. The system according to claim 10, wherein the aggregation device is specifically configured to:
when the model similarity corresponding to the first segmented model is greater than or equal to a threshold, add, to the set of first user equipments, the user equipment that sends the first segmented model.

12. The system according to claim 10 or 11, wherein the aggregation device is specifically configured to:

obtain the set of first user equipments from the blockchain, determine an intersection set of sets of first user equipments, and determine user equipments in the intersection set; and

when segmented random numbers sent by the user equipments are received, generate the partial aggregated models based on the second segmented models sent by the user equipments in the intersection set and the segmented random numbers; or

when segmented random numbers sent by the user equipments are not received, generate the partial aggregated models based on the second segmented models sent by the user equipments in the intersection set.

13. The system according to claim 12, wherein the user equipment is specifically configured to:

receive the global aggregated models, and eliminate random numbers in the received global aggregated models based on the corresponding random number, to generate a plurality of global models; and

verify the aggregation device based on the plurality of global models.

14. The system according to claim 13, wherein the user equipment is specifically configured to:

when the plurality of global models are completely the same, update the segmented model based on the global model; or

when the plurality of global models are not completely the same, determine a first global aggregated model corresponding to a first global model that is different from a plurality of remaining global models, and disconnect a connection to the aggregation device that sends the first global aggregated model.

15. An aggregation apparatus, used in an aggregation device in a distributed federated learning system, wherein the distributed federated learning system comprises user equipments, aggregation devices, and a blockchain comprising the aggregation devices, each aggregation device is connected to a plurality of user equipments, and the aggregation apparatus comprises a transceiver module, a computing module, and an aggregation module, wherein

the transceiver module is configured to receive a plurality of first segmented models sent by the user equipments, wherein the first segmented model is generated by the user equipment by performing segmentation and perturbation on a segmented model obtained through training based on first training data;

the computing module is configured to separately compute similarities between the plurality of first segmented models and a standard model to obtain a plurality of model similarities, wherein the standard model is generated by the aggregation device through training based on second training data, and there is a one-to-one correspondence between the plurality of first segmented models and the plurality of similarities;

the aggregation module is configured to generate partial aggregated models based on second segmented models, wherein the second segmented models are selected from the plurality of first segmented models based on the model similarities;

the transceiver module is further configured to: upload the partial aggregated models to the blockchain, and obtain, from the blockchain, partial aggregated models corresponding to the user equipments;

the aggregation module performs aggregation based on the partial aggregated models corresponding to the user equipments to generate global aggregated models; and
the transceiver module is further configured to send the global aggregated models to the corresponding user equipments, so that the user equipments verify the aggregation device based on the global aggregated models.

16. The apparatus according to claim 15, wherein the model similarity is generated by the aggregation device based on a vector of the first segmented model, a vector of the standard model, and a vector size, wherein a vector size of the first segmented model is the same as a vector size of the standard model.

17. The apparatus according to claim 15, wherein the transceiver module is further configured to:
receive a plurality of segmented random numbers sent by the user equipments, wherein the segmented random number is generated by the user equipment by performing segmentation and perturbation based on a random number generated by a random number generator.

18. The apparatus according to claim 17, wherein the aggregation module is specifically configured to:

determine a set of first user equipments based on the model similarities, and upload the set of first user equipments to the blockchain through the transceiver module; and
select, from the first segmented models based on the set of first user equipments that is obtained by the transceiver module from the blockchain, the second segmented models for aggregation.

19. The apparatus according to claim 18, wherein the aggregation module is specifically configured to:
when the model similarity corresponding to the first segmented model is greater than or equal to a threshold, add, to the set of first user equipments, the user equipment that sends the first segmented model.

20. The apparatus according to claim 18 or 19, wherein the aggregation module is specifically configured to:

obtain the set of a plurality of first user equipments from the blockchain through the transceiver module, determine an intersection set of sets of first user equipments, and determine user equipments in the intersection set; and
when the transceiver module receives segmented random numbers sent by the user equipments, generate the partial aggregated models based on the second segmented models sent by the user equipments in the intersection set and the segmented random numbers; or
when the transceiver module does not receive segmented random numbers sent by the user equipments, generate the partial aggregated models based on the second segmented models sent by the user equipments in the intersection set.

21. An aggregation device, wherein the aggregation device comprises at least one processor and one memory; the memory stores instructions; and when the instructions are executed by the at least one processor, the at least one processor is enabled to perform the method according to claim 1.

22. A computing device cluster, comprising at least one computing device, wherein each computing device comprises a processor and a memory; and
a processor of the at least one computing device is configured to execute instructions stored in a memory of the at least one computing device, to enable the computing device cluster to perform the method according to claim 1.

23. A computer program product comprising instructions, wherein when the instructions are run by a computing device cluster, the computing device cluster is enabled to perform the method according to claim 1.

24. A computer-readable storage medium, comprising computer program instructions, wherein when the computer program instructions are executed by a computing device cluster, the computing device cluster performs the method according to claim 1.

FIG. 1

| User equipments | Aggregation device | Blockchain |
|---|---|---|

S210: Generate a plurality of first segmented models

S210: Send the plurality of first segmented models to the aggregation device

S220: Receive the plurality of first segmented models, and separately compute similarities between the plurality of first segmented models and a standard model to obtain a plurality of model similarities

S230: Determine a set of first user equipments based on the model similarities, and selects, from the first segmented models based on the set of first user equipments, second segmented models for aggregation

S240: Generate partial aggregated models based on the second segmented models

S240: Upload the partial aggregated models to the blockchain

S250: Obtain, from the blockchain, partial aggregated models corresponding to the user equipments

S250: Perform aggregation based on the partial aggregated models to generate global aggregated models

S250: Send the global aggregated models to the corresponding user equipments

S260: Receive the global aggregated models, and verify the aggregation device based on the global aggregated models

FIG. 2

Aggregation apparatus 300

Transceiver module 310

Computing module 320

Aggregation module 330

FIG. 3

Computing device 400

Processor 410

Memory 420

Program

Data

Communication interface 430

Bus 440

FIG. 4

FIG. 5

FIG. 6

## INTERNATIONAL SEARCH REPORT

| International application No. |
| --- |
| **PCT/CN2024/071483** |

| A. | CLASSIFICATION OF SUBJECT MATTER |
| --- | --- |

G06F21/60(2013.01)i

According to International Patent Classification (IPC) or to both national classification and IPC

| B. | FIELDS SEARCHED |
| --- | --- |

Minimum documentation searched (classification system followed by classification symbols)

IPC:G06F

Documentation searched other than minimum documentation to the extent that such documents are included in the fields searched

Electronic data base consulted during the international search (name of data base and, where practicable, search terms used)

VEN, CNABS, CNTXT, WOTXT, EPTXT, USTXT, CNKI, IEEE: 联邦学习系统, 区块, 沈蒙, 王婧, 相似, 薛腾飞, 聚合, 分割, 第一, 第二, 模型, 中毒, 病毒, 局部, 全局, federated learning, block, similarity, polymerization, segmentation, first, model, virus, part, overall

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| A | CN 113806768 A (BEIJING INSTITUTE OF TECHNOLOGY) 17 December 2021 (2021-12-17) claims 1-5, and description, paragraphs [0037]-[0096] | 1-24 |
| A | CN 114580009 A (JILIN YUANYI TECHNOLOGY CO., LTD.) 03 June 2022 (2022-06-03) entire document | 1-24 |
| A | CN 114492739 A (BEIJING UNIVERSITY OF POSTS AND TELECOMMUNICATIONS) 13 May 2022 (2022-05-13) entire document | 1-24 |
| A | US 2021406782 A1 (TIESET, INC.) 30 December 2021 (2021-12-30) entire document | 1-24 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **13 March 2024** | **21 March 2024** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

| International application No. |
| --- |
| **PCT/CN2024/071483** |

| Patent document cited in search report | | | Publication date (day/month/year) | Patent family member(s) | | | Publication date (day/month/year) |
| --- | --- | --- | --- | --- | --- | --- | --- |
| CN | 113806768 | A | 17 December 2021 | None | | | |
| CN | 114580009 | A | 03 June 2022 | None | | | |
| CN | 114492739 | A | 13 May 2022 | None | | | |
| US | 2021406782 | A1 | 30 December 2021 | WO | 2022005937 | A1 | 06 January 2022 |

Form PCT/ISA/210 (patent family annex) (July 2022)

**EP 4 651 001 A1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310127459